# EUROPEAN PATENT APPLICATION

(11) **EP 2 103 779 A1**
(43) Date of publication of application: **23.09.2009**
(21) Application number: 09250371.3
(22) Date of filing: 13.02.2009
(51) Int. Cl.: F01D 5/00, B23P 6/00

(54) **Methods and apparatuses for correcting twist angle in a gas turbine engine blade**

(30) Priority: 18.03.2008 SG 200802172
(71) Applicant: Turbine Overhaul Services Private Limited, Jurong Town, Singapore 638639 (SG)
(72) Inventor: Lee, Swee Kay, Singapore 610358 (SG); Chee, Beng Wong, Singapore 530435 (SG); Shafudin B., Turadi Mohammad, Singapore 460079 (SG)
(74) Representative: Tomlinson, Kerry John

(57) **Abstract**

The present invention includes a method and a system repairing a twist angle of a turbine blade, which method includes restraining (54) a root of the blade, induction heating (56) one or more portions of the blade, and applying (58) an angular load to a tip of the blade.

## Description

### BACKGROUND

The present invention relates to turbine blade repair procedures and tooling. In particular, the present invention relates to turbine blade twist angle correction.

A gas turbine engine commonly includes a fan, a compressor, a combustor, a turbine, and an exhaust nozzle. During engine operation, working medium gases, for example air, are drawn into and compressed in the compressor. The compressed air is channeled to the combustor where fuel is added to the air and the air/fuel mixture is ignited. The products of combustion are discharged to the turbine section, which extracts work from these products to produce useful thrust to power, for example, an aircraft in flight.

The compressor and turbine commonly include alternating stages of rotor blades and stator vanes. Compressor and turbine blades and vanes (hereinafter referred to as "turbine blades" or "blades") often include complex, contoured airfoil geometries designed to optimally interact with the working medium gas passing through the engine. One common feature of airfoil geometries is the blade twist angle. The twist angle is the angular displacement of the airfoil about a spanwise axis, such as the stacking line, from the root to the tip of the airfoil. During normal engine operation, the blade twist angle feature, which is a critical characteristic of turbine blades, decreases due to thermo-mechanical cycling and aerodynamic loading of the blades. The twist angle must be restored to the original manufactured condition during engine overhaul prior to returning the blade to service.

Some gas turbine blades include coatings to increase performance and efficiency. For example, the operating temperature of the high pressure turbine often exceeds the material limits of the turbine blades. Therefore, the blades may include a thermal barrier coating ("TBC") adapted to increase the temperature range in which the blade may operate without material failure. Prior methods and apparatuses for correcting twist angle commonly utilize a twist wrench, bench vise and a twist gage in a cold working process. Cold working twist correction is commonly carried out on uncoated turbine blades, as cold working of coated blades commonly produces unacceptable micro-cracking in the blade coating. Coated blades therefore commonly have the coating stripped prior to repairing the twist angle. Unfortunately, turbine blades ordinarily have limits to the number of times they can have their coatings stripped and reapplied before completely scrapping the part.

Therefore, improved methods and apparatuses for correcting the twist angle of coated blades are needed.

### SUMMARY

The present invention includes a method of repairing a twist angle of a turbine blade, which method includes restraining a root of the blade, induction heating one or more portions of the blade, and applying an angular load to a tip of the blade.

### BRIEF DESCRIPTION OF THE DRAWINGS

FIGS. 1A and 1B are top and side views respectively of a twisted gas turbine blade.
FIG. 2 is a perspective view of one embodiment of a system for repairing the twist angle of a turbine blade.
FIG. 3 is a partial broken view of the twist angle repair system of FIG. 2.
FIG. 4 is a flow chart illustrating a method of repairing a twist angle of a turbine blade according to the present invention.
FIG. 5 is a perspective view of an apparatus for measuring the twist angle of a turbine blade.
FIG. 6 is a perspective view of a motorized twisting apparatus for applying an angular load to repair the twist angle of a turbine blade.

### DETAILED DESCRIPTION

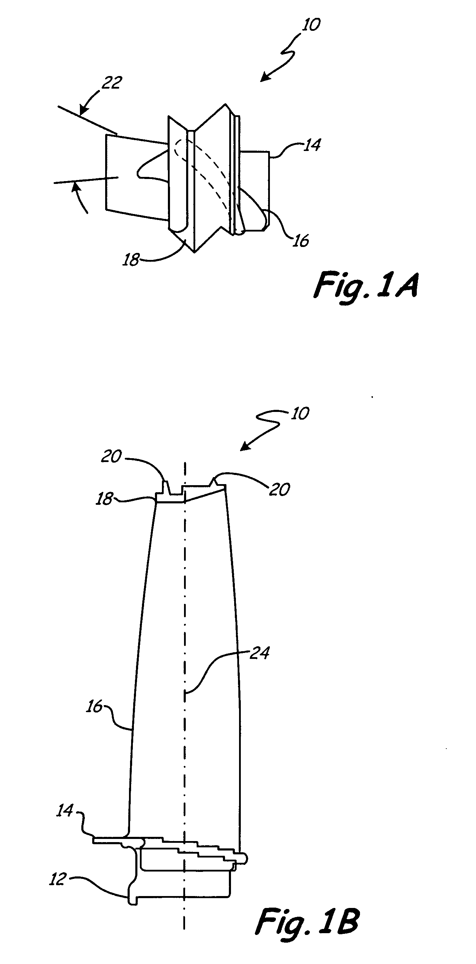

FIGS. 1A and 1B are top and side views respectively of twisted gas turbine blade 10, which includes root 12, platform 14, airfoil 16, shroud 18, and knife edges 20. In FIGS. 1A and 1B, blade 10 is a gas turbine blade including twisted airfoil 16 which may be corrected using methods and apparatuses according to the present invention. Blade 10 may be, for example, a shrouded high pressure turbine blade. Blade 10 includes root 12, which may include dovetail or fir tree geometry configured to be received in a slot in the rim of a rotor disc. Blade 10 also includes platform 14 integral with and radially outward of root 12. Airfoil 16 of blade 10 extends radially from platform 14 to shroud 18. Shroud 18 includes knife edges 20 designed to engage, for example, a stationary honeycomb seal arranged radially outward of turbine blade 10 mounted in the rim of the rotor disc. Twist angle 22 of blade 10 is equal to the angular displacement of airfoil 16 about a spanwise axis, such as stacking axis 24 of airfoil 16, between platform 14 and shroud 18. During normal engine operation, twist angle 22 of blade 10 may decrease due to thermo-mechanical cycling and aerodynamic loading on blade 10. In order to extend the useful life of blade 10, twist angle 22 may be restored to the original manufactured condition during engine overhaul prior to returning blade 10 to service. In addition to being internally cooled and employing complicated geometrical features, gas turbine blades are commonly coated to extend the range of blade operating conditions. For example, blade 10 in FIGS. 1A and 1B may include a coating, such as a thermal barrier coating ("TBC"), which may act to increase the temperature range at which blade 10 may operate.

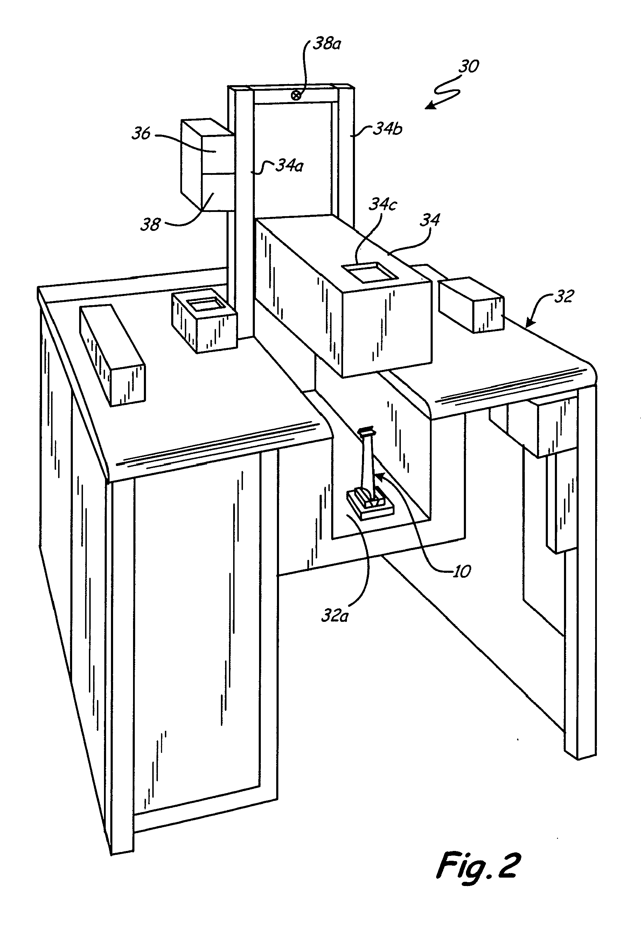

FIG. 2 is a perspective view of system 30 for repairing twist angle 22 of blade 10, which system 30 includes bench 32, induction heating chamber 34, power source 36, and control system 38. In FIG. 2, bench 32 includes platform 32a for positioning blade 10 for repair. Induction heating chamber 34 may be adjustably connected to tracks 34a, 34b and may be configured to move up and down for heating blade 10. Induction heating chamber 34 is electrically connected to power source 36 and control system 38. Power source 36 may be configured to supply alternating electrical current to induction heating chamber 34 during repair of blade 10. Control system 38 may be configured to vary the magnitude of current supplied by power source 36, as well as receive feedback about the conditions of induction heating chamber 34 from, for example, non-contact thermometer 38a configured to sense the temperature inside chamber 34. Non-contact thermometer 38a may be, for example, an infrared thermometer, which is sometimes referred to as a laser thermometer when a laser is used to aim the thermometer at the body being measured. Infrared thermometers .commonly include a lens adapted to focus the infrared energy emitted by the body onto a sensor that converts the energy to an electrical signal that can be displayed in units of temperature. Non-contacting thermometers are useful for applications where, for example, the magnetic field created during induction heating compromises the accuracy of thermocouples or other contacting thermometers.

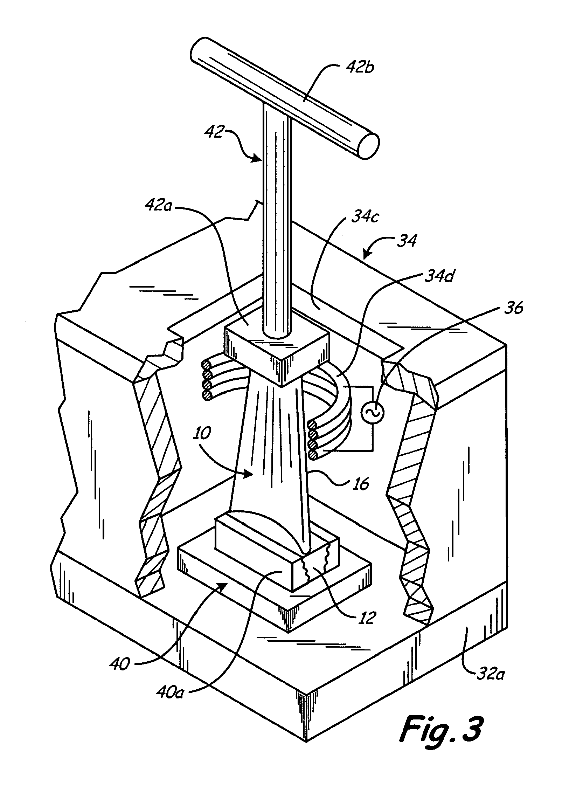

FIG. 3 is a detail broken view of induction heating chamber 34 positioned for repairing blade 10. In FIG. 3, heating chamber 34 includes window 34c and induction coils 34d surrounding portions of airfoil 16 of blade 10. Root 12 of blade 10 is restrained by fixture 40 arranged inside induction heating chamber 34 and a tool, such as wrench 42 may be configured to engage the tip of blade 10 through window 34c. Fixture 40 may include root-adaptor 40a configured to receive varying root geometries, such as the dovetail root 12 of blade 10. In other embodiments of the present invention, blade 10 may be restrained at root 12 with a fixture configured to clamp root 12, rather than nesting root 12 in an adaptor. Wrench 42 may include tip-adaptor 42a and handle 42b. Tip-adaptor 42a may be configured to engage the tip of a turbine blade, such as engaging shroud 18 of blade 10 as shown in FIG. 3. For example, tip-adaptor 42a may include a pocket configured to receive the geometry of shroud 18 of blade 10. The handle 42b is configured to allow operators to apply an angular load to the tip of blade 10 through adaptor 42a. In alternative embodiments of the present invention, the handle 42b may, instead of the "T" shape shown in FIG. 3, be connected to and extend laterally from one side of adaptor 42a. Induction coils 34d are mounted to induction heating chamber 34 and arranged around portions of blade 10. The induction coils 34d may be, for example, arranged around portions of blade 10 subject to the highest stress during blade twist repair operations. Induction coils 34d are connected to power source 36 configured to produce an alternating electrical current in coils 34d.

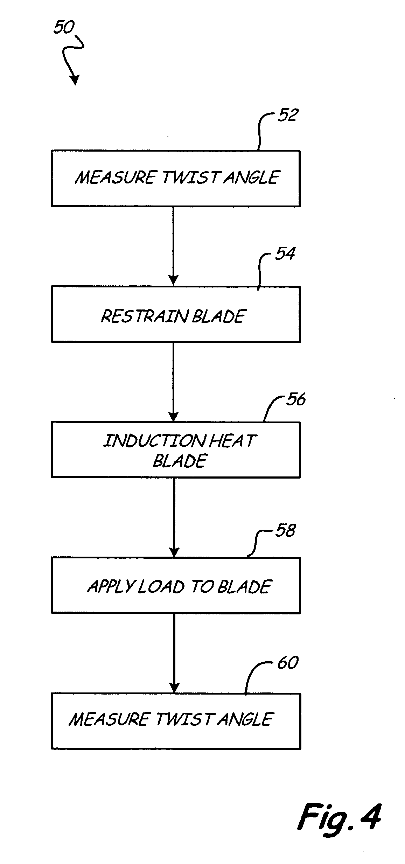

FIG. 4 is a flow chart illustrating method 50 of repairing a twist angle of a turbine blade, which method 50 includes measuring an existing twist angle of the blade (step 52), restraining a root of the blade (step 54), induction heating one or more portions of the blade (step 56), applying an angular load to a tip of the blade (step 58), and measuring a repaired twist angle of the blade (step 60). Gas turbine components may only be repaired or overhauled a certain number of times before it becomes necessary to completely replace the component. In the case of turbine blades, certain dimensional requirements may dictate repair versus replacement of the component. Method 50 may therefore be preceded by checking one or more dimensions of the blade prior to proceeding with any repair procedures. In the case the blade dimensions are not within acceptable tolerance limits, the component may need to be scrapped completely.

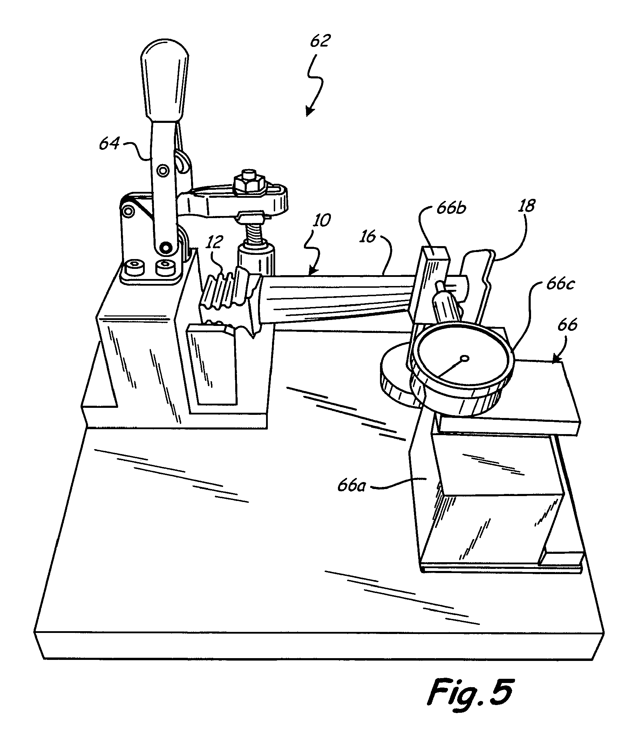

Method 50 includes measuring an existing twist angle of the blade (step 52). Measuring an existing twist angle of the blade (step 52) may include engaging one or more portions of the blade with a twist angle gauge. For example, FIG. 5 is a perspective view of twist angle measuring apparatus 62, which includes toggle clamp 64 and gauge 66. Gauge 66 includes base 66a, probe 66b, and indicator 66c. In FIG. 5, blade 10 is arranged horizontally and clamped at root 12 by toggle clamp 64. Gauge 66 is positioned adjacent to and configured to engage airfoil 16 of blade 10. Base 66a of gauge 66 may be moved into and out of engagement with airfoil 16 of blade 10. Probe 66b may be spring loaded and connected to indicator 66c. The tip of probe 66b may also be contoured to properly engage the contoured geometry of airfoil 16. As base 66a of gauge 66 is moved into position, probe 66b engages airfoil 16 of blade 10 and indicator 66c provides twist angle 22 of blade 10.

In addition to measuring an existing twist angle of the blade (step 52), method 50 includes restraining a root of the blade (step 54). Restraining a root of the blade (step 54) may include nesting the root of the blade in a fixture configured to receive the blade root, or, alternatively, clamping the root of the blade in a fixture. For example, FIGS. 2 and 3 show system 30 for repairing the twist angle of blade 10 shown in FIGS. 1A and 1B. In FIG. 3, blade 10 is restrained at the root using fixture 42. Fixture 42 includes root-adapter 42a configured to receive root 12 of blade 10. Root-adapter 42a may be configured to receive varying root geometries, such as dovetail root 12 of blade 10. In other embodiments of the present invention, the root of the blade may be restrained (step 54) using, for example, a vise or toggle clamp to clamp root 12 of blade 10.

Method 50 also includes induction heating one or more portions of the blade (step 56). Induction heating one or more portions of the blade (step 56) may include arranging one or more induction coils about one or more portions of the blade and producing an alternating electrical current in the one or more induction coils. In FIG. 3, for example, induction coils 34d may be arranged around portions of blade 10 inside induction heating chamber 34. Induction coils 34d are connected to power source 36 configured to produce an alternating electrical current in coils 34d. The alternating current passing through coils 34d creates an alternating magnetic field. When a part constructed of a conductive material, such as blade 10 made from, for example, a directionally solidified nickel alloy, is placed within coils 34d and enters the magnetic field, circulating eddy currents are induced within blade 10. The eddy currents flow against the electrical resistivity of blade 10, generating localized heat without any direct contact between blade 10 and coils 34d. Induction coils 34d may be, for example, arranged around portions of blade 10 subject to the highest stress during blade twist repair operations. Induction heating the blade (step 56) may act to substantially reduce the risk of micro-cracking when blade 10 is plastically deformed to restore twist angle 22.

In addition to induction heating the blade (step 56), method 50 includes applying an angular load to a tip of the blade (step 58). Applying an angular load to the tip of the blade (step 58) may be accomplished using a tool. In FIG. 3, for example, an operator may engage shroud 18 of blade 10 with tip-adaptor 42a of wrench 42 and arbitrarily twist blade 10 using wrench 42 one or more times. The operator may apply the angular load(s) to the tip of the blade (step 58) using wrench 42 through window 34c, while blade 10 is arranged inside induction heating chamber 34. Therefore, in some embodiments of the present invention, the angular load may be applied to the tip of the blade (step 58) during induction heating of the blade (step 56).

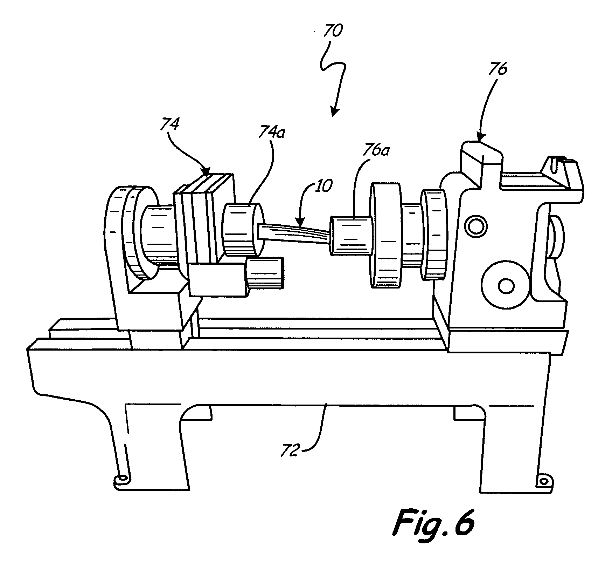

In an alternative embodiment of the present invention, applying an angular load to the tip of the blade (step 58) may include applying a specific, i.e. a first, angular load to the tip of the blade over a period of time. The first angular load may be applied to the tip of the blade over a period of time using a motorized twisting apparatus. For example, FIG. 6 shows motorized twisting apparatus 70, which includes base 72, fixture 74, and motor 76. Fixture 74 and motor 76 are adjustably mounted to base 72 for moving into and out of engagement with blade 10. Fixture 74 includes root-adaptor 74a for receiving, for example, root 12 of blade 10. Motor 76 includes tip-adaptor 76a for receiving, for example, shroud 18 of blade 10. The motor 76 may be electronically controlled to apply the first angular load to shroud 18 of blade 10 over a period of time. For example, the motor 76 may be a servo motor capable of producing the first angular load. The angular position of the servo motor armature, and therefore the angle through which blade 10 is twisted, and the duration over which the servo motor applies the first angular load may be prescribed by a control circuit integrated with the servo motor.

Embodiments of the present invention have several advantages over prior blade repair methods and apparatuses. Repairing the twist angle of coated turbine blades with methods and apparatuses according to the present invention without necessitating coating removal increases the number of times the blade may be repaired and returned to service, which in turn increases the longevity and decreases the cost of the engine. Additionally, induction heating the blades prior to applying loads to restore the twist angle of the blade substantially reduces the risk of micro-cracking in the coating or other parts of the blade, thereby increasing the reliability and reducing the risk of failure of the blade after being returned to service.

Although the present invention has been described with reference to preferred embodiments, workers skilled in the art will recognize that changes may be made in form and detail without departing from the scope of the invention, which is defined by the claims and their equivalents.

## Claims

1. A method of repairing a twist angle of a turbine blade, the method comprising:
restraining (54) a root of the blade;
induction heating (56) one or more portions of the blade; and
applying (58) an angular load to a tip of the blade.

2. The method of claim 1 further comprising measuring (52) an existing twist angle of the blade prior to induction heating one or more portions of the blade.

3. The method of claim 1 or 2 further comprising measuring (60) a repaired twist angle of the blade after applying the angular load to the tip of the blade.

4. The method of claim 2 or 3, wherein measuring a twist angle of the blade comprises engaging one or more portions of the blade with a twist angle gauge.

5. The method of claim 1, 2, 3 or 4, wherein restraining the root of the blade comprises clamping the root of the blade in a fixture; or wherein restraining the root of the blade comprises nesting the root of the blade in a fixture configured to receive the blade root.

6. The method of any preceding claim, wherein induction heating one or more portions of the blade comprises:
arranging one or more induction coils about one or more portions of the blade;
producing an alternating electrical current in the one or more induction coils.

7. The method of any preceding claim, wherein the angular load is applied to the tip of the blade using a tool.

8. The method of any preceding claim, wherein applying an angular load to a tip of the blade comprises applying a first angular load to a tip of the blade over a period of time; and preferably wherein the first angular load is applied to the tip of the blade over a period of time using a motorized twisting apparatus.

9. The method of any preceding claim, wherein applying an angular load to a tip of the blade comprises applying an angular load to a tip of the blade during the step of induction heating one or more portions of the blade.

10. A system for repairing a twist angle of a turbine blade (10), the system comprising:
a fixture (40) configured to restrain a root of the blade;
an induction heating apparatus (34) configured to heat one or more portions of the blade; and
a twisting apparatus (42;70) configured to apply an angular load to a tip of the blade.

11. The system of claim 10, wherein the fixture comprises an adapter (40a) configured to receive the root of the blade.

12. The system of claim 11, wherein the adapter is configured to receive one of a dovetail or a fir tree root geometry.

13. The system of claim 10, 11 or 12, wherein the induction heating apparatus comprises:
a plurality of induction coils (34d); and
a power source (36) configured to produce an alternating electrical current in the plurality of induction coils.

14. The system of claim 13 further comprising a control system (38) configured to vary the magnitude of the alternating electrical current in the induction coils.

15. The system of claim 10, 11, 12 or 13, wherein the twisting apparatus comprises one or more electrical motors (76) configured to apply the angular load to the tip of the blade; and preferably wherein the one or more electrical motors comprise one or more electrical motors configured to vary the angle through which and the time period over which the angular load is applied to the tip of the blade.
